# EUROPEAN PATENT APPLICATION

(11) **EP 4 380 291 A1**
(43) Date of publication of application: **05.06.2024**
(21) Application number: 22847858.2
(22) Date of filing: 23.03.2022
(51) Int. Cl.: H04W 76/10

(54) **CONNECTION MANAGEMENT METHOD AND APPARATUS, AND COMMUNICATION NODE AND STORAGE MEDIUM**

(30) Priority: 29.07.2021 CN 202110866878
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN)
(74) Representative: Savi, Massimiliano
(86) International application number: PCT/CN2022/082521
(87) International publication number: WO 2023/005238

(57) **Abstract**

A connection management method and apparatus, and a communication node and a storage medium. The connection management method comprises: determining a connection condition that a user equipment (UE) satisfies (110); and when the connection condition is satisfied, performing a corresponding radio resource control (RRC) connection operation (120).

## Description

### CROSS-REFERENCE TO RELATED APPLICATION

The present disclosure is filed on the basis of Chinese patent application No. 202110866878.3 filed July 29, 2021, and claims priority to the Chinese patent application, the entire contents of which are incorporated herein by reference.

### TECHNICAL FIELD

The present disclosure relates to the field of wireless communication network technologies, and more particularly, to a connection management method and apparatus, a communication node, and a storage medium.

### BACKGROUND

In a wireless communication system, when a serving cell changes due to satellite movement, a user equipment (UE) has to select another serving cell. This leads to a connection interruption, and the UE needs to establish or resume the connection many times. For example, if cell reselection or cell selection occurs during the establishment or resumption of a Radio Resource Control (RRC) initiated by the UE, the RRC process fails. For another example, in a satellite scenario, a region may be served by a plurality of satellites in succession. After the UE camps on a serving cell, if the serving cell is about to move away and a new serving cell is coming, the UE is handed over to the new cell through cell selection or reselection. This also leads to the failure of the RRC connection establishment process. For another example, if there is a coverage hole between the current serving cell and a new serving cell, the coverage is discontinuous between satellites, or the current serving cell is about to stop service, the RRC connection establishment process will also fail. Thus, it can be seen that in scenarios where the serving cell changes or is about to change, the establishment or resumption of connection may be ineffective, the stability of connection is unsatisfactory, and the power consumption of the UE is high.

### SUMMARY

The present disclosure provides a connection management method and apparatus, a communication node, and a storage medium.

An embodiment of the present disclosure provides a connection management method, including: determining a connection condition that a UE satisfies; and performing a corresponding RRC connection operation in response to the connection condition being satisfied.

An embodiment of the present disclosure provides a connection management method, including: sending first indication information, where the first indication information is used for instructing a UE to determine a corresponding RRC connection operation according to a connection condition that the UE satisfies; and responding to an RRC connection operation performed by the UE.

An embodiment of the present disclosure provides a communication node, including: a memory, a processor, and a computer program stored in the memory and executable by the processor, where the program, when executed by the processor, causes the processor to implement the connection management method described above.

An embodiment of the present disclosure further provides a computer-readable storage medium, storing a computer program which, when executed by a processor, causes the processor to implement the connection management method described above.

### BRIEF DESCRIPTION OF DRAWINGS

FIG. 1 is a flowchart of a connection management method according to an embodiment;
FIG. 2 is a flowchart of another connection management method according to an embodiment;
FIG. 3 is a schematic diagram of an RRC connection management process according to an embodiment;
FIG. 4 is a schematic diagram of another RRC connection management process according to an embodiment;
FIG. 5 is a schematic diagram of still another RRC connection management process according to an embodiment;
FIG. 6 is a schematic structural diagram of a connection management apparatus according to an embodiment;
FIG. 7 is a schematic structural diagram of another connection management apparatus according to an embodiment; and
FIG. 8 is a schematic structural diagram of hardware of a communication node according to an embodiment.

### DETAILED DESCRIPTION

The present disclosure is further described below with reference to the accompanying drawings and embodiments. It should be understood that the specific embodiments described herein are merely used for illustrating the present disclosure, and are not intended to limit the present disclosure. It is to be noted that the embodiments and features therein in the present disclosure may be combined with each other if not in collision. In addition, it should be noted that, for the convenience of description, the drawings only show some but not all the structures related to the present disclosure.

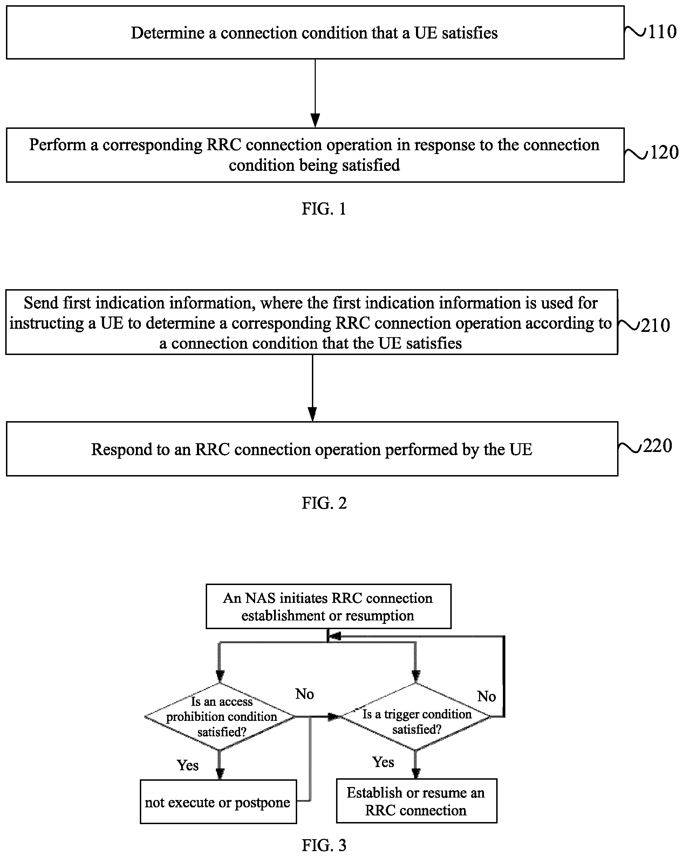

In an embodiment of the present disclosure, a connection management method is provided. The method may be applied to a UE. FIG. 1 is a flowchart of a connection management method according to an embodiment. As shown in FIG. 1, the method provided in this embodiment includes the following steps 110 to 120.

In a step of 110, a connection condition that a UE satisfies is determined.

In a step of 120, a corresponding RRC connection operation is performed when the connection condition is satisfied.

In this embodiment, the connection condition includes a trigger condition indicating that the UE needs to establish or resume an RRC connection, or an access prohibition condition, i.e., a condition indicating that the UE does not need to establish or resume an RRC connection. On the basis of determining the connection condition that the UE satisfies, the UE may perform a corresponding RRC connection operation, i.e., determine whether to establish or resume an RRC connection. For example, in a case where the UE is handed over from an original serving cell to a new target cell, if the target cell has been able to provide stable service for the UE (for example, the service of the target cell has started and lasted for a period of time), it indicates that the UE satisfies the trigger condition. In this case, the UE may establish or resume an RRC connection. If the UE has just been handed over to the target cell (for example, the service of the target cell has started for a short period of time), it indicates that the UE satisfies the access prohibition condition, and should not establish or resume an RRC connection, or postpone the establishment or resumption of the RRC connection, until the trigger condition is met to establish or resume the RRC connection.

According to the method of this embodiment, in a scenario where a serving cell changes or is about to change, a UE performs a corresponding RRC connection operation according to a connection condition that the UE satisfies, such that the RRC connection operation is effective, thereby improving the stability of the RRC connection and reducing the power consumption of the UE.

In an embodiment, the connection condition includes a trigger condition; and
the step 120 includes: performing a first connection operation when the trigger condition is satisfied, where the first connection operation includes establishing or resuming an RRC connection.

In an embodiment, the connection condition includes an access prohibition condition; and
the step 120 includes: performing a second connection operation when the access prohibition condition is satisfied, where the second connection operation includes delaying establishment of an RRC connection, delaying resumption of an RRC connection, not establishing an RRC connection, or not resuming an RRC connection.

In an embodiment, the method further includes a step 100. In the step 100, first indication information is received, where the first indication information is used for instructing the UE to determine the corresponding RRC connection operation according to the connection condition.

In this embodiment, a network side may indicate, through the first indication information, whether the UE needs to determine the corresponding RRC connection operation according to the connection condition. After receiving the first indication information, the UE first determines the connection condition that the UE currently satisfies, and then performs the corresponding RRC connection operation.

In an embodiment, the method further includes a step 112.

In the step 112, second indication information is received, where the second indication information is used for instructing the UE to determine a threshold for an RRC connection operation.

In this embodiment, the network side may indicate, to the UE through the second indication information, one or more thresholds for determining an RRC connection operation. The indicated one or more thresholds may be used for measuring stability of a service provided by the target cell. For example, if a duration since a moment at which the target cell starts service exceeds a threshold 1, or if a duration since a moment at which the original serving cell stops service exceeds a threshold 2, it indicates that the UE satisfies the trigger condition. In this case, the UE may perform the first connection operation. If the duration since the moment at which the target cell starts service does not reach the threshold 1, or if the duration since the moment at which the original serving cell stops service does not reach the threshold 2, it indicates that the UE satisfies the access prohibition condition. In this case, the UE may perform the second connection operation.

In an embodiment, the method further includes a step 130. In the step 130, information indicating an RRC connection establishment failure or resumption failure is returned to a Non-Access Stratum (NAS) through RRC.

In this embodiment, if the UE satisfies the access prohibition condition, the UE performs the second connection operation and returns information indicating an RRC connection establishment failure or resumption failure to the NAS.

In an embodiment, the method further includes a step 114. In the step 114, a parameter for determining an RRC connection operation is reported to an NAS through RRC.

In this embodiment, the NAS determines, according to the parameter reported through RRC, whether an RRC connection needs to be established or resumed.

In an embodiment, the parameter for determining the RRC connection operation includes at least one of: a time at which a serving cell stops service; a time at which a target cell starts service; an access prohibition time; a waiting time; or a UE identity in a paging message.

In an embodiment, the step 110 includes: determining according to a first service type that the UE satisfies the trigger condition, where the first service type includes at least one of an emergency call, a called service, an Early Data Transmission (EDT) service, a Preconfigured Uplink Resource (PUR) service, or a service having a data packet less than a threshold.

In an embodiment, the step 110 includes: determining according to a second service type that the UE satisfies the access prohibition condition, where the second service type includes at least one of: a calling service, a non-EDT service, a non-PUR service, or a service having a data packet reaching a threshold.

In an embodiment, the step 110 includes: determining that the UE satisfies the access prohibition condition according to at least one of the following pieces of information:
a time at which a serving cell stops service; a time at which a target cell starts service; ephemeris information; signal quality of a serving cell; a waiting time; an access prohibition time; a time of a coverage hole; a time of a specified operation; access prohibition broadcast information and a corresponding validity time period; access grade broadcast information and a corresponding access prohibition time period; or access grade broadcast information and a corresponding validity time period;
where the access prohibition time includes at least one of an access prohibition start time, an access prohibition duration, or an access prohibition end time; and
the waiting time includes at least one of: a waiting start time, a waiting duration, or a waiting end time.

In an embodiment, the access prohibition condition includes at least one of
a current moment being later than a set moment corresponding to a first threshold before a time at which a serving cell stops service;
a current moment being earlier than a set moment corresponding to a second threshold before a time at which a target cell starts service;
a Reference Signal Received Power (RSRP) in a serving cell being less than a power threshold;
a current moment belonging to a waiting time or an access prohibition time;
a service type belonging to a second service type;
a current moment belonging to a validity time period corresponding to access prohibition broadcast information;
a current moment belonging to an access prohibition time period corresponding to access grade broadcast information;
a current moment belonging to a validity time period corresponding to access grade broadcast information;
a current moment being later than a set moment corresponding to a third threshold before a start time of a coverage hole; or
a current moment being later than a set moment corresponding to a fourth threshold before a start time of a specified operation.

In an embodiment, the method further includes a step 116.

In the step 116, a waiting time required for establishing or resuming an RRC connection or an access prohibition time is determined according to a time of a coverage hole, a time at which a serving cell stops service, a time at which a target cell starts service, or a time of a specified operation,
where the specified operation includes at least one of:
deactivating an Access Stratum (AS), stopping a measurement, stopping cell selection or reselection, stopping listening for a paging message, stopping Public Land Mobile Network (PLMN) selection, or stopping initiating an RRC process.

In this embodiment, if the UE satisfies the access prohibition condition and needs to postpone the establishment or resumption of the RRC connection, the waiting time or the access prohibition time may be determined according to one or more pieces of the above time information, and the UE establishes or resumes the RRC connection after the waiting time or the access prohibition time.

In an embodiment, the step 110 includes: determining that the UE satisfies the trigger condition according to at least one of the following pieces of information: a time at which a serving cell stops service; a time at which a target cell starts service; a result of cell reselection or cell selection; an end time of a coverage hole; or an end time of access prohibition.

In an embodiment, the trigger condition includes at least one of:
a current moment being earlier than a set moment corresponding to a fifth threshold before a time at which a serving cell stops service;
a current moment being later than a set moment corresponding to a sixth threshold before a time at which a target cell starts service;
cell reselection or cell selection being completed;
a current moment being later than a set moment corresponding to a seventh threshold before an end time of a coverage hole; or
a current moment being later than a set moment corresponding to an eighth threshold after an end time of access prohibition.

In an embodiment, the connection condition includes a reestablishment condition; and
the step 110 includes: determining that the UE satisfies the reestablishment condition according to at least one of the following pieces of information: a time at which a serving cell stops service; a time at which a target cell starts service; channel quality of a serving cell; or access prohibition information of a serving cell.

In an embodiment, the reestablishment condition includes at least one of:
a current moment belonging to a set range corresponding to the time at which the serving cell stops service;
an Out-Of-Step (OOS) message being received;
a current moment belonging to a timing period of monitoring a wireless link failure;
a current moment belonging to a set range corresponding to the time at which the target cell starts service; or
the serving cell being a serving cell to which access is prohibited.

In an embodiment of the present disclosure, a connection management method is provided. The method may be applied to a network side, for example, a base station. FIG. 2 is a flowchart of another connection management method according to an embodiment. As shown in FIG. 2, the method provided in this embodiment includes the following steps 210 to 220. It should be noted that for technical details that are not described in detail in this embodiment, reference may be made to any of the above embodiments.

In a step of 210, first indication information is sent, where the first indication information is used for instructing a UE to determine a corresponding RRC connection operation according to a connection condition that the UE satisfies.

In a step of 220, a response is made to an RRC connection operation performed by the UE.

According to the method of this embodiment, in a scenario where a serving cell changes or is about to change, a network side may instruct a UE to perform a corresponding RRC connection operation according to a connection condition that the UE satisfies, such that the RRC connection operation is effective, thereby improving the stability of the RRC connection and reducing the power consumption of the UE.

In an embodiment, the method further includes a step 212. In the step 212, second indication information is sent, where the second indication information is used for instructing the UE to determine a threshold for an RRC connection operation.

In an embodiment, the method further includes a step 214. In the step 214, third indication information is sent, where the third indication information is used for instructing the UE to report a parameter for determining a connection operation to an NAS of the UE through RRC.

In an embodiment, the method further includes a step 216. In the step 216, at least one of the following is configured through system information broadcast or through an RRC message:
a time at which a serving cell stops service; a time at which a target cell starts service; ephemeris information;
signal quality of a serving cell; a waiting time; an access prohibition time; a time of a coverage hole; a time of a specified operation;
access prohibition broadcast information and a corresponding validity time period; access grade broadcast information and a corresponding access prohibition time period; access grade broadcast information and a corresponding validity time period;
a first threshold; a second threshold; a third threshold; a fourth threshold; a fifth threshold; a sixth threshold; or a power threshold,
where the access prohibition time includes at least one of an access prohibition start time, an access prohibition duration, or an access prohibition end time; and
the waiting time includes at least one of: a waiting start time, a waiting duration, or a waiting end time.

The connection management method will be described below by way of specific examples.

### Example One:

This example describes a procedure of initiating an RRC process by a UE. Generally, in a process where a UE initiates an RRC connection establishment or resumption process, such as sending an RRC Connection Request, an RRC Connection Resume Request, an RRC Early Data Request, etc., if cell reselection or cell selection occurs, the RRC process fails. For example, the UE starts a timer T300 in the process of initiating RRC connection establishment. If cell selection or reselection occurs during running of T300, an RRC layer of the UE determines that the RRC connection establishment fails or the RRC resumption fails, and sends an indication to a higher-layer NAS.

For example, in a satellite scenario, some satellites are moving. A region may be served by a plurality of satellites in succession, for example, served by cell 1 of satellite 1 at moment 1, and served by cell 2 of satellite 2 at moment 2. After a UE camps on a cell, if the current serving cell is about to move away and a new serving cell is coming, the UE is handed over to the new cell through cell selection or reselection. However, when a UE attempts to establish a connection in a cell, but the current serving cell is about to move away, cell selection or reselection may occur during the RRC connection establishment process. In this case, the RRC connection establishment process fails. For another example, it is assumed that there is a coverage hole between the current serving cell and a new cell, for example, the coverage is discontinuous between satellite 1 and satellite 2. If the current serving cell is about to stop service, the current serving cell cannot complete data transmission even if the UE has successfully established a connection to the current serving cell, and will release the connection with the UE soon. In this case, the UE needs to select a new cell and re-establish a connection to transmit data. To prevent the UE from establishing or resuming the connection multiple times, a possible solution is to postpone the UE from establishing or resuming a connection in the serving cell and enable the UE to establish or resume a connection in the new cell.

In this example, a base station may broadcast or configure an indication bit that enables the UE to determine through RRC whether to not execute or postpone the establishment or resumption of the RRC connection (where not execute means that the RRC connection is not established or resumed), and instruct, through first indication information, the UE to determine a corresponding RRC connection operation according to a connection condition that the UE satisfies. If the base station broadcasts or configures the indication bit, the RRC may need to determine whether an access prohibition condition of not executing or postponing the establishment or resumption of the RRC connection is satisfied at a current moment, before establishing or resuming the RRC connection.

In addition, the base station may also broadcast or configure a threshold for determining whether to not execute or postpone the establishment or resumption of the RRC connection, and indicate the threshold through second indication information. The base station may broadcast or configure an indication bit that enables the UE to determine through RRC when to establish or resume the RRC connection. If the base station broadcasts or configures the indication bit, the RRC may need to determine whether a trigger condition for establishing or resuming the RRC connection is satisfied at the current moment, before establishing or resuming the RRC connection. The base station may broadcast or configure a threshold for determining when to establish or resume the RRC connection.

There are several RRC connection management methods as follows.

Method One: FIG. 3 is a schematic diagram of an RRC connection management process according to an embodiment. As shown in FIG. 3, the NAS initiates RRC connection establishment or resumption. If the access prohibition condition is satisfied (refer to Example Two for the process of determining whether the access prohibition condition is satisfied), the UE performs the second connection operation, i.e., not executing or postponing the establishment or resumption of the RRC connection. When the trigger condition is satisfied (refer to Example Three for the process of determining whether the trigger condition is satisfied), the UE performs the first connection operation, i.e., establishes or resumes the RRC connection.

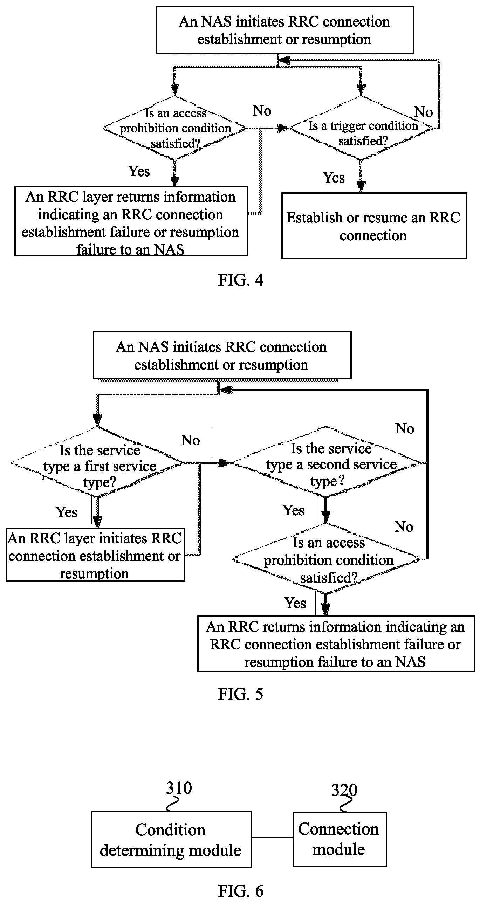

Method Two: FIG. 4 is a schematic diagram of another RRC connection management process according to an embodiment. As shown in FIG. 4, the NAS initiates RRC connection establishment or resumption. If the access prohibition condition is satisfied (refer to Example Two for the process of determining whether the access prohibition condition is satisfied), the RRC layer returns information indicating an RRC connection establishment or resumption failure. If the trigger condition is satisfied (refer to Example Three for the process of determining whether the trigger condition is satisfied), the UE establishes or resumes the RRC connection.

When a higher-layer NAS of the UE requests the UE to establish or resume the RRC connection, the RRC layer returns an RRC connection establishment or resumption failure to the NAS if determining that the access prohibition condition is satisfied. The RRC layer may also return a cause of the failure to the NAS. For example, the cause may include that access is prohibited, the serving cell is about to stop service, cell reselection or selection occurs, the UE is about to enter a coverage hole, etc. The RRC layer may also return an RRC access prohibition time or a waiting time to the NAS. For the access prohibition time or the waiting time, reference may be made to Example Two.

Method Three: The NAS determines whether to or when to establish or resume an RRC connection. To help the NAS complete this function, the RRC layer reports a parameter for determining an RRC connection operation to the NAS (refer to Example Four) to assist the NAS in the determination.

Method Four: The RRC layer decides according to a service type whether to not execute or postpone the establishment or resumption of the RRC connection. FIG. 5 is a schematic diagram of still another RRC connection management process according to an embodiment. As shown in FIG. 5, when the higher-layer NAS initiates RRC connection establishment or resumption, the RRC layer determines an access prohibition grade. For a first type of service, the RRC layer determines that access is allowed, and performs the first connection operation. For a second type of service, the RRC layer determines that access is not allowed, and performs the second connection operation. For example, when the higher-layer NAS initiates RRC connection establishment or resumption, the RRC determines whether the service is of a first service type or a second service type. The first service type may mean that a cause of establishment of the service is an emergency call, or being called, or the service satisfying a condition of EDT, or the service satisfying a condition of PUR, or the service being a small-packet service, for example, a data packet size of the service being less than a threshold, the RRC initiates an RRC connection establishment or resumption process. The second service type may mean that a cause of establishment of the service is calling, signaling or the like, or service not satisfying a condition of EDT or PUR, or the service being not a small-packet service. When determining that the service is of the second service type, the RRC layer further determines whether the access prohibition condition is satisfied (refer to Example Two). If yes, the RRC layer prohibits the access of the service and returns a failure to the NAS. The RRC layer may also return a cause of the failure to the NAS. For example, the cause may include that access is prohibited, the serving cell is about to stop service, cell reselection or selection occurs, the UE is about to enter a coverage hole, etc. The RRC layer may also return an RRC access prohibition time or a waiting time to the NAS (refer to Example Four).

### Example Two

This example describes a procedure of postponing establishment or resumption of an RRC connection by a UE when the UE satisfies an access prohibition condition.

If the current serving cell is about to stop service, the current serving cell cannot complete data transmission even if the UE has successfully established a connection to the current serving cell, and will release the connection with the UE soon. In this case, the UE needs to select a new cell (i.e., a target cell) and re-establish a connection to transmit data.

To prevent the UE from establishing or resuming the connection multiple times, a possible solution is to postpone, when the following condition is satisfied, the UE from establishing or resuming a connection in the serving cell and enable the UE to establish or resume a connection in the new cell.

Method One: The RRC layer chooses to not execute (i.e., not establish or resume the RRC connection) or postpone the establishment or resumption of the RRC connection, or to prohibit access, according to a time at which the serving cell stops service (e.g., a time at which the serving cell is about to stop service or a time at which the serving cell has stopped service).

A base station configures the time at which the serving cell is about to stop service, a time at which the target cell starts service, or ephemeris information through system information broadcast or in an RRC message. After receiving the broadcast or RRC message, the UE can determine the time at which the serving cell is about to stop service. The RRC layer chooses to not execute or postpone the establishment or resumption of the RRC connection, or to prohibit access, according to the time at which the serving cell is about to stop service or has stopped service.

When the serving cell is about to no longer cover or has no longer covered a region where the UE is located, for example, when a current moment is later than a set moment corresponding to a first threshold before the time at which the serving cell stops service (where the set moment is obtained by subtracting the first threshold from the time at which the serving cell stops service), indicating that the original serving cell is about to move away and the UE is attempting to select a target cell, the RRC layer chooses to not execute or postpone the establishment or resumption of the RRC connection, or to prohibit access.

Method Two: The RRC layer chooses to not execute or postpone the establishment or resumption of the RRC connection, or to prohibit access, according to the time at which the target cell starts service. The target cell may be a next cell covering the region where the UE is located, and may be a neighboring cell of the original serving cell.

A base station configures the time at which the target cell starts service or ephemeris information through system information broadcast or in an RRC message. After receiving the broadcast or RRC message, the UE can determine the time at which the target cell starts service. The RRC layer chooses to not execute or postpone the establishment or resumption of the RRC connection, according to the time at which the target cell starts service.

When the target cell is about to cover the region, for example, when a current moment is earlier than a set moment corresponding to a second threshold before the time at which the target cell starts service (where the set moment is obtained by adding the time at which the target cell starts service and the second threshold), indicating that the target cell is about to cover the region but the UE has not selected the target cell, the RRC layer may choose to not execute or postpone the establishment or resumption of the RRC connection, or to prohibit access.

Method Three: The RRC layer chooses to not execute or postpone the establishment or resumption of the RRC connection, or to prohibit access, according to signal quality of the serving cell.

The UE measures the signal quality of the serving cell, such as a RSRP value. For example, when the RSRP value is less than a power threshold, indicating that the serving cell is about to move away, the RRC layer chooses to not execute or postpone the establishment or resumption of the RRC connection, or postpone the establishment or postpone resumption of the RRC connection, or to prohibit access.

Method Four: The above methods are used in combination. For example, when the moment obtained by adding the time at which the target cell starts service and the second threshold is later than the current moment and the current moment is later than the moment obtained by subtracting the first threshold from the time at which the serving cell is about to stop service, the RRC layer may choose to not execute or postpone the establishment or resumption of the RRC connection, or to prohibit access. Alternatively, when the current moment is later than the moment obtained by subtracting the first threshold from the time at which the serving cell is about to stop service and the RSRP value is less than the power threshold, the RRC layer may choose to not execute or postpone the establishment or resumption of the RRC connection, or to prohibit access.

Method Five: The RRC layer chooses to not execute or postpone the establishment or resumption of the RRC connection, or to prohibit access, according to a waiting time or an access prohibition time. When the current moment is within the waiting time or the access prohibition time, the RRC layer chooses to not execute or postpone the establishment or resumption of the RRC connection, or to prohibit access.

The RRC layer determines the waiting time or the access prohibition time according to the time at which the serving cell is about to stop service or the time at which the target cell starts service, etc. The UE determines the time at which the serving cell is about to stop service or the time at which the target cell starts service. If the serving cell has stopped service or a difference between the current moment and the time at which the serving cell is about to stop service falls within a range, i.e., the serving cell is about to stop service, the waiting time or the access prohibition time needs to be determined. For example, a start time of the access prohibition time or the waiting time is the time at which the serving cell is about to stop service, a set moment corresponding to a first time before the time at which the serving cell is about to stop service, etc. An end time of the access prohibition time or the waiting time is the time at which the target cell starts service, a moment corresponding to a second time after the time at which the serving cell is about to stop service, a moment corresponding to a third time after the time at which the target cell starts service, etc.

Method Six: The RRC layer chooses to not execute the establishment or resumption of the RRC connection, or to prohibit access, according to a start time of a coverage hole, of a specified operation, or of the access prohibition time. During the coverage hole or the specified operation, the UE may perform an operation of deactivating an Access Stratum (AS) layer, not execute a measurement, not execute cell selection, not execute cell reselection, not listening for a paging message, not execute PLMN selection, not execute initiating an RRC process, and so on.

The UE can determine the start time, a duration, or an end time of a coverage hole time or the access prohibition time, and accordingly choose to not execute or postpone the establishment or resumption of the RRC connection, or to prohibit access.

When the coverage hole time or the access prohibition time is about to be reached or the UE is about to perform the specified operation, for example, when the current moment is later than a set moment corresponding to a corresponding threshold before the start time of the coverage hole, or the current moment is later than a set moment corresponding to a corresponding threshold before a start time of access prohibition, or the current moment is later than a set moment corresponding to a corresponding threshold before a start time of the specified operation, indicating that the UE is about to enter the coverage hole or access of the UE is about to be prohibited or the UE is about to perform the specified operation, the RRC layer chooses to not execute or postpone the establishment or resumption of the RRC connection, or to prohibit access.

Method Seven: The RRC layer of the UE can determine a waiting time or an access prohibition time according to a time of a coverage hole, a time of a specified operation, the time at which the serving cell is about to stop service, and/or the time at which the target cell starts service. During the waiting time or the access prohibition time, the UE does not execute or postpones the establishment or resumption of the RRC connection, or prohibits access.

If a difference between the current moment and a start time of the coverage hole or the access prohibition time falls within a range or falls within a duration of the coverage hole or access prohibition, the waiting time or the access prohibition time needs to be determined. For example, a start time of the access prohibition time or the waiting time is a moment at which the UE is about to reach the coverage hole or a moment at which access of the UE is about to be prohibited, and is, for example, obtained by subtracting a corresponding threshold from the start time of the coverage hole or the specified operation. An end time of the access prohibition time or the waiting time is a moment at which the UE is about to leave the coverage hole or a moment at which access prohibition is about to be ended, and is, for example, obtained by adding a corresponding threshold and the end time of the coverage hole or the specified operation.

For Method One to Method Seven, it can be understood that during the handover process between the serving cell and the target cell or in the case of existence of the coverage hole or the specified operation or existence of the access prohibition time, the time during which the second connection operation is determined to be performed is extended, thereby avoiding the instability of the RRC connection established or resumed by the UE during the handover process and improving the reliability of the RRC connection operation.

Method Eight: The RRC layer sets access prohibition according to the access prohibition time and the like. For the determining of the access prohibition time by the RRC layer, reference may be made to Method Five and Method Seven of this example. The RRC layer starts a timer at the start time of access prohibition. A duration of the timer is the length of the access prohibition time. The timer is stopped by an event that ends the access prohibition time. For example, when the UE selects the target cell, as described in Example Three, the timer is stopped. During running of the timer, the RRC layer prohibits the establishment or resumption of the RRC connection.

The RRC layer sets access prohibition for some services according to the access prohibition time. For the determining of the access prohibition time by the RRC layer, reference may be made to Method Five and Method Seven. For some services, for example, services of the second service type in Method Four of Example One, the RRC layer starts a timer at the start time of access prohibition. A duration of the timer is the length of the access prohibition time. The timer is stopped by an event that ends the access prohibition time. For example, when the UE selects the target cell, as described in Example Three, the timer is stopped. During running of the timer, the RRC layer prohibits the establishment or resumption of the RRC connection.

Method Nine: The base station broadcasts access prohibition and associates the access prohibition with a validity time period. The base station broadcasts an access prohibition identifier, where the identifier is associated with a time period. During this time period, the identifier is valid. For example, the base station broadcasts an access prohibition flag bit, which is associated with a time period from T1 to T2. After receiving the access prohibition flag bit, the UE determines that access to the cell is prohibited within the time period from T1 to T2, and therefore the UE does not initiate RRC connection establishment.

The base station broadcasts an access grade and associates the access grade with a time period during which access is prohibited. The base station broadcasts an access grade, which is associated with a time period during which access is prohibited. In this time period, access is prohibited for a service corresponding to the access grade. For example, the base station broadcasts an access grade of 4, which is associated with the time period from T1 to T2. After receiving the access grade, the UE determines that access is prohibited for a service having an access grade of 4 in the time period from T1 to T2, and therefore the UE does not initiate RRC connection establishment of the service.

Alternatively, the base station broadcasts an access grade and associates the access grade with a validity time period. The base station broadcasts an access grade, which is associated with a validity time period. In this time period, access is allowed for a service corresponding to the access grade. For example, the base station broadcasts an access grade of 4, which is associated with the time period from T1 to T2. After receiving the access grade, the UE determines that access is allowed for a service having an access grade of 4 in the time period from T1 to T2, and therefore the UE can initiate RRC connection establishment of the service.

In the above example, the thresholds may be positive or negative. Absolute values of the thresholds may be the duration of T300, a duration for searching for a cell, 0, etc. The thresholds may be broadcast or configured by the base station. The above thresholds may be the same or different.

### Example Three

This example describes a procedure of establishing or postponing resuming an RRC connection by a UE when the UE satisfies a trigger condition.

To prevent the UE from establishing or resuming the connection multiple times, a possible solution is to postpone the UE from establishing or resuming a connection in the serving cell and enable the UE to establish or resume a connection in the new cell. A scheme used by UE to choose to perform RRC connection establishment or resumption is as follows.

Method One: The RRC layer chooses to perform a first connection operation, i.e., perform RRC connection establishment or resumption, or allow access, according to a time at which the serving cell is about to stop service. A base station configures the time at which the serving cell is about to stop service or ephemeris information through system information broadcast or in an RRC message. After receiving the broadcast or RRC message, the UE can determine the time at which the serving cell is about to stop service. If a current moment is sufficiently earlier than the time at which the serving cell is about to stop service, i.e., the serving cell is covering a region where the UE is located, for example, if the current moment is earlier than a set moment corresponding to a fifth threshold before the time at which the serving cell stops service (where the set moment is obtained by subtracting the fifth threshold from the time at which the serving cell is about to stop service), the RRC layer may choose to establish or resume an RRC connection, or allow access.

Method Two: The RRC layer chooses to perform a first connection operation, i.e., perform RRC connection establishment or resumption, or allow access, according to a time at which a target cell starts service. A base station configures the time at which the target cell starts service or ephemeris information through system information broadcast or in an RRC message. After receiving the broadcast or RRC message, the UE can determine the time at which the target cell starts service. If the current moment is later than the time at which the target cell starts service, i.e., the target cell is covering the region where the UE is located, for example, if the current moment is later than a set time corresponding to a sixth threshold after the time at which the target cell starts service (where the set moment is obtained by adding the time at which the target cell starts service and the sixth threshold), the RRC layer may choose to establish or resume an RRC connection, or allow access.

Method Three: According to a result of cell reselection or cell selection, the RRC layer chooses to perform RRC connection establishment or resumption, or to allow access, or to end the waiting time or the access prohibition time.

If the UE has completed cell selection or reselection, i.e., the UE has selected the target cell, the RRC layer may choose to perform RRC connection establishment or resumption, or to allow access, or to end the waiting time or the access prohibition time.

Method Four: The RRC layer chooses to perform RRC connection establishment or resumption or allow access, according to an end time of a coverage hole or access prohibition.

The UE can determine a time of the coverage hole or access prohibition. The RRC layer chooses to perform RRC connection establishment or resumption or allow access, according to an end time of a coverage hole or access prohibition.

If the current moment is later than the end time of the coverage hole or access prohibition, for example, if the current moment is later than a moment obtained by adding the end time of the coverage hole or access prohibition and a corresponding threshold, indicating that the UE has moved out of the coverage hole or access of the UE is no longer prohibited, the RRC layer chooses to perform RRC connection establishment or resumption or allow access.

### Method Five: Combination of the above methods

If the current moment is sufficiently earlier than the time at which the serving cell is about to stop service or the current moment is sufficiently later than the time at which the target cell starts service, and the RRC layer selects a target cell, indicating that the original serving cell has stopped service, the target cell has covered the region, and the UE has selected the target cell, the RRC layer decides to establish or resume an RRC connection, or to allow access. For example, the current moment is earlier than a moment obtained by subtracting the fifth threshold from the time at which the serving cell is about to stop service. Alternatively, when the moment obtained by adding the time at which the serving cell starts service and the sixth threshold is earlier than the current moment and the RRC layer selects a new target cell, the RRC layer decides to establish or resume an RRC connection, or allow access.

If the current moment is later than an end time of a coverage hole or access prohibition or a specified operation, and the RRC selects a target cell, i.e., the target cell has covered the region and the UE has selected the target cell, for example, if the current moment is later than a moment obtained by adding the end time of the coverage hole or access prohibition or the specified operation and a corresponding threshold and the RRC layer selects a new cell, the RRC layer decides to establish or resume an RRC connection, or to allow access.

For Method One to Method Five, it can be understood that during the handover process between the serving cell and the target cell or in the case of existence of the coverage hole or the specified operation or existence of the access prohibition time, the time during which the first connection operation is determined to be performed is limited, such that the UE establishes or resumes as far as possible a stable RRC connection before a possible handover or after a handover is completed and the service of the cell is stable, thereby improving the reliability of the RRC connection operation.

The above thresholds can be positive or negative. Absolute values of the thresholds may be the duration of T300, a duration for searching for a cell, 0, etc. The thresholds may be broadcast or configured by the base station. The thresholds may be the same or different.

### Example Four

In this example, a process of the RRC layer reporting to the NAS a parameter for determining an RRC connection operation is described.

The NAS determines when to establish or resume an RRC connection, as described in Method Three of Example One. To help the NAS complete this function, the RRC layer reports a parameter for determining an RRC connection operation to the NAS. Specific methods are as follows.

Method One: The RRC layer reports to the NAS the time at which the serving cell is about to stop service or the time at which the target cell starts service. The base station may broadcast or configure an indication bit that enables the RRC layer to report information to the NAS. The information may be the time at which the serving cell is about to stop service and/or the time at which the target cell starts service. When the UE is in an RRC idle mode or inactive mode, the UE camps on a serving cell, and reads system information of the serving cell, for example, the time at which the serving cell is about to stop service and/or the time at which the target cell starts service. The RRC layer reports the system information to the NAS. When the UE is in an RRC connected mode and receives configuration information from the base station, for example, the time at which the serving cell is about to stop service and/or the time at which the target cell starts service, the RRC reports the configuration information to the NAS.

Method Two: The RRC layer reports an access prohibition time or a waiting time to the NAS. The base station may broadcast or configure an indication bit that enables the RRC layer to report information to the NAS. The information may be the access prohibition time or the waiting time. When the UE is in an RRC idle mode or inactive mode, the UE camps on a serving cell, and reads system information of the serving cell. The UE acquires the access prohibition time or the waiting time, as described in Method Five and Method Seven of Example Two, and reports same to the NAS. When the UE is in an RRC connected mode and receives configuration information from the base station, for example, the time at which the serving cell is about to stop service and/or the time at which the target cell starts service, time of a coverage hole, etc. The UE acquires the access prohibition time or the waiting time, as described in Method Five and Method Seven of Example Two, and reports same to the NAS. Here, the access prohibition time or the waiting time includes a start time and a duration, or a start time or an end time.

Alternatively, the RRC reports the start time of the access prohibition time or the waiting time to the NAS, to indicate that the access prohibition time or the waiting time starts. The RRC layer may also report the duration or end time of the access prohibition time or the waiting time to the NAS. Alternatively, the RRC reports the end time of the access prohibition time or the waiting time to the NAS, to indicate that the access prohibition time or the waiting time ends.

Method Three: After receiving a paging message, the RRC layer reports a time at which a serving cell is about to stop service, a time at which a new cell starts service, or an access prohibition time, a waiting time, etc., to the NAS. After receiving the paging message, the RRC layer reports a UE identity and the like in the paging message to the NAS, and also reports the time at which the serving cell is about to stop service, the time at which the new cell starts service, the access prohibition time, or the waiting time to the NAS. The access prohibition time or the waiting time may be determined as described in Method Five and Method Seven of Example Two.

### Example Five

Generally, when quality of a wireless link deteriorates, for example, when quality of a signal received by a UE is lower than a threshold, the UE detects a physical layer problem. Then the UE attempts to resume the wireless link. If the quality of the wireless link improves, the UE resumes the wireless link and continue to be in a connected mode in the cell. If the quality of the wireless link continues to deteriorate and the wireless link cannot be resumed, the UE triggers a wireless link failure process, and also trigger an RRC connection reestablishment process, enabling the UE to quickly select another cell. In the RRC connection reestablishment process, the UE perform cell selection. If selecting a cell, the UE re-establishes an RRC connection in the cell.

In a satellite scenario, some satellites are moving. Especially if a satellite moves to another region and no longer serves the region where the UE is located, the quality of the signal received by the UE gradually deteriorates, until no signal from the satellite can be received. When the satellite is about to stop serving the region, the UE detects a physical layer problem. If the UE continues to attempt to resume the wireless link according to an existing process, a time at which the UE reselects to another cell is delayed. Because the signal quality of the satellite is getting worse, the operation of resuming the wireless link is useless. The UE should attempt to establish an RRC connection in another cell as soon as possible to continue service transmission. Possible solutions are as follows.

Method One: The UE triggers the wireless link failure process according to the time at which the serving cell is about to stop service. The UE learns the time at which the serving cell is about to stop service. When the current moment is close to (for example, less than or equal to or greater than) the time at which the serving cell is about to stop service, i.e., the current moment belongs to a set range corresponding to the time at which the serving cell stops service, indicating that the serving cell is about to stop service, the UE triggers an RRC connection reestablishment process. For example, when a value obtained by subtracting the current moment from the time at which the serving cell is about to stop service is less than a corresponding threshold, or when the current moment is later than a moment obtained by subtracting the threshold from the time at which the serving cell is about to stop service, the UE triggers the RRC connection reestablishment process.

Method Two: The UE triggers the wireless link failure process according to channel quality of the serving cell and the time at which the serving cell is about to stop service. When the current moment is close to (for example, less than or equal to or greater than) the time at which the serving cell is about to stop service and the radio quality deteriorates, i.e., the serving cell is about to stop service and the signal quality deteriorates, the UE triggers an RRC connection reestablishment process. For example, when a value obtained by subtracting the current moment from the time at which the serving cell is about to stop service is less than a corresponding threshold or the current moment is later than a moment obtained by subtracting the threshold from the time at which the serving cell is about to stop service, and the RRC layer receives one or N OOS messages or T310 is running, the UE triggers the RRC connection reestablishment process.

Method Three: The UE triggers the wireless link failure process according to the time at which the target cell starts service. The UE learns the time at which the target cell starts service. Here, the target cell is a next cell providing coverage in place of the serving cell, a neighboring cell of the serving cell, etc. When the current moment is close to (for example, less than or equal to or greater than) the time at which the target cell starts service, i.e., the current moment belongs to a set range corresponding to the time at which the target cell starts service, indicating that a new cell is about to provide service, the UE triggers an RRC connection reestablishment process. For example, when a value obtained by subtracting the time at which the target cell starts service from the current moment is less than a corresponding threshold, or a value obtained by subtracting the current moment from the time at which the target cell starts service is less than a corresponding threshold, the UE triggers the RRC connection reestablishment process.

Method Four: The UE triggers the wireless link failure process according to channel quality of the target cell and the time at which the target cell starts service. When the current moment is close to (for example, less than or equal to or greater than) the time at which the target cell starts service and the radio quality deteriorates, i.e., a new cell is about to provide service and the signal quality deteriorates, the UE triggers an RRC connection reestablishment process. For example, when a value obtained by subtracting the time at which the target cell starts service from the current moment is less than a corresponding threshold, or a value obtained by subtracting the current moment from the time at which the target cell starts service is less than a corresponding threshold, and the RRC layer receives one or N OOS messages or T310 is running, the UE triggers the RRC connection reestablishment process.

Method Five: In the RRC connection reestablishment process, the UE considers that access to the original serving cell is prohibited. In the RRC connection reestablishment process triggered by the above causes (Method One to Method Four), the original serving cell is about to stop service. If an RSRP measured by the UE cannot track the deterioration of signal quality in time, the UE may obtain a measurement result of the original serving cell, and consequently the UE selects the original serving cell again in the cell selection process. To avoid this situation, the UE should consider in the cell selection process that access to the original serving cell is prohibited and the original serving cell cannot be used as a candidate for cell selection. In this way, the UE will not select the original serving cell. In the RRC connection reestablishment process triggered by the above causes, the UE should consider in the cell selection process that access to the original serving cell is prohibited and the original serving cell cannot be used as a candidate for cell selection.

An embodiment of the present disclosure provides a connection management apparatus. FIG. 6 is a schematic structural diagram of a connection management apparatus according to an embodiment. As shown in FIG. 6, the connection management apparatus includes:
a condition determining module 310, configured for determining a connection condition that a UE satisfies; and
a connection module 320, configured for performing a corresponding RRC connection operation when the connection condition is satisfied.

According to the connection management apparatus of this embodiment, in a scenario where a serving cell changes or is about to change, a UE performs a corresponding RRC connection operation according to a connection condition that the UE satisfies, such that the RRC connection operation is effective, thereby improving the stability of the RRC connection and reducing the power consumption of the UE.

In an embodiment, the connection condition includes a trigger condition; and
the connection module 320 is further configured for: performing a first connection operation when the trigger condition is satisfied, where the first connection operation includes establishing or resuming an RRC connection.

In an embodiment, the connection condition includes an access prohibition condition; and
the connection module 320 is further configured for: performing a second connection operation when the access prohibition condition is satisfied, where the second connection operation includes delaying establishment of an RRC connection, delaying resumption of an RRC connection, not establishing an RRC connection, or not resuming an RRC connection.

In an embodiment, the apparatus further includes:
a first receiving module, configured for receiving first indication information, where the first indication information is used for instructing the UE to determine the corresponding RRC connection operation according to the connection condition.

In an embodiment, the apparatus further includes:
a second receiving module, configured for receiving second indication information, where the second indication information is used for instructing the UE to determine a threshold for the RRC connection operation.

In an embodiment, the apparatus further includes:
a reply module, configured for returning information indicating an RRC connection establishment failure or resumption failure to an NAS through RRC.

In an embodiment, the apparatus further includes:
a reporting module, configured for reporting a parameter for determining an RRC connection operation to an NAS through RRC.

In an embodiment, the parameter for determining the RRC connection operation includes at least one of: a time at which a serving cell stops service; a time at which a target cell starts service; an access prohibition time; a waiting time; or a UE identity in a paging message.

In an embodiment, the condition determining module 310 is further configured for: determining according to a first service type that the UE satisfies the trigger condition, where the first service type includes at least one of an emergency call, a called service, an EDT service, a PUR service, or a service having a data packet less than a threshold.

In an embodiment, the condition determining module 310 is further configured for: determining according to a second service type that the UE satisfies the access prohibition condition, where the second service type includes at least one of: a calling service, a non-EDT service, a non-PUR service, or a service having a data packet reaching a threshold.

In an embodiment, the condition determining module 310 is further configured for: determining that the UE satisfies the access prohibition condition according to at least one of the following pieces of information:
a time at which a serving cell stops service; a time at which a target cell starts service; ephemeris information;
signal quality of a serving cell; a waiting time; an access prohibition time; a time of a coverage hole; a time of a specified operation;
access prohibition broadcast information and a corresponding validity time period; access grade broadcast information and a corresponding access prohibition time period; or access grade broadcast information and a corresponding validity time period;
where the access prohibition time includes at least one of an access prohibition start time, an access prohibition duration, or an access prohibition end time; and
the waiting time includes at least one of: a waiting start time, a waiting duration, or a waiting end time.
In an embodiment, the access prohibition condition includes at least one of
a current moment being later than a set moment corresponding to a first threshold before a time at which a serving cell stops service;
a current moment being earlier than a set moment corresponding to a second threshold before a time at which a target cell starts service;
an RSRP in a serving cell being less than a power threshold;
a current moment belonging to a waiting time or an access prohibition time;
a service type belonging to a second service type;
a current moment belonging to a validity time period corresponding to access prohibition broadcast information;
a current moment belonging to an access prohibition time period corresponding to access grade broadcast information;
a current moment belonging to a validity time period corresponding to access grade broadcast information;
a current moment being later than a set moment corresponding to a third threshold before a start time of a coverage hole; or
a current moment being later than a set moment corresponding to a fourth threshold before a start time of a specified operation.
In an embodiment, the apparatus further includes: a time determining module, configured for: determining a waiting time required for establishing or resuming an RRC connection or an access prohibition time according to a time of a coverage hole, a time at which a serving cell stops service, a time at which a target cell starts service, or a time of a specified operation,
where the specified operation includes at least one of:
   deactivating an AS, stopping a measurement, stopping cell selection or reselection, stopping listening for a paging message, stopping PLMN selection, or stopping initiating an RRC process.

In an embodiment, the condition determining module 310 is further configured for: determining that the UE satisfies the trigger condition according to at least one of the following pieces of information: a time at which a serving cell stops service; a time at which a target cell starts service; a result of cell reselection or cell selection; an end time of a coverage hole; or an end time of access prohibition.

In an embodiment, the trigger condition includes at least one of:
a current moment being earlier than a set moment corresponding to a fifth threshold before a time at which a serving cell stops service;
a current moment being later than a set moment corresponding to a sixth threshold before a time at which a target cell starts service;
cell reselection or cell selection being completed;
a current moment being later than a set moment corresponding to a seventh threshold before an end time of a coverage hole; or
a current moment being later than a set moment corresponding to an eighth threshold after an end time of access prohibition.

In an embodiment, the connection condition includes a reestablishment condition; and
determining a connection condition that a UE satisfies includes: determining that the UE satisfies the reestablishment condition according to at least one of the following pieces of information: a time at which a serving cell stops service; a time at which a target cell starts service; channel quality of a serving cell; or access prohibition information of a serving cell.

In an embodiment, the reestablishment condition includes at least one of:
a current moment belonging to a set range corresponding to the time at which the serving cell stops service;
an OOS message being received;
a current moment belonging to a timing period of monitoring a wireless link failure;
a current moment belonging to a set range corresponding to the time at which the target cell starts service; or
the serving cell being a serving cell to which access is prohibited.

The connection management apparatus provided in this embodiment and the connection management method provided in the above embodiments belong to the same inventive concept. For technical details that are not described in detail in this embodiment, reference may be made to any of the above embodiments. This embodiment has the same beneficial effects as those obtained by the execution of the connection management method.

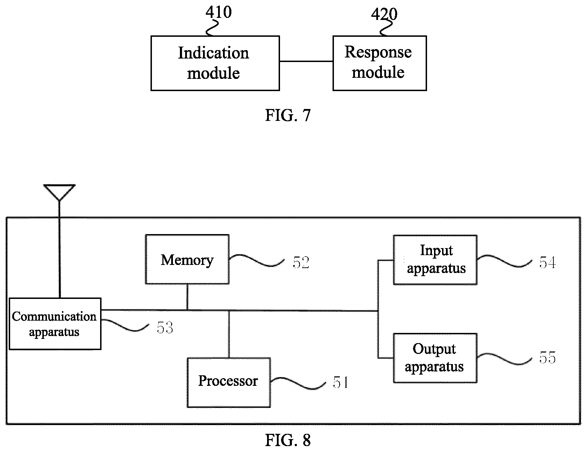

An embodiment of the present disclosure further provides a connection management apparatus. FIG. 7 is a schematic structural diagram of another connection management apparatus according to an embodiment. As shown in FIG. 7, the connection management apparatus includes:
an indication module 410, configured for sending first indication information, where the first indication information is used for instructing a UE to determine a corresponding RRC connection operation according to a connection condition that the UE satisfies; and
a response module 420, configured for responding to an RRC connection operation performed by the UE.

According to the connection management apparatus of this embodiment, in a scenario where a serving cell changes or is about to change, a network side may instruct a UE to perform a corresponding RRC connection operation according to a connection condition that the UE satisfies, such that the RRC connection operation is effective, thereby improving the stability of the RRC connection and reducing the power consumption of the UE.

In an embodiment, the apparatus further includes:
a threshold indication module, configured for sending second indication information, where the second indication information is used for instructing the UE to determine a threshold for an RRC connection operation.

In an embodiment, the apparatus further includes:
a reporting indication module, configured for sending third indication information, where the third indication information is used for instructing the UE to report a parameter for determining a connection operation to an NAS of the UE through RRC.

In an embodiment, the apparatus further includes:
a configuration module, configured for configuring at least one of the following through system information broadcast or through an RRC message:
a time at which a serving cell stops service; a time at which a target cell starts service; ephemeris information;
signal quality of a serving cell; a waiting time; an access prohibition time; a time of a coverage hole; a time of a specified operation;
access prohibition broadcast information and a corresponding validity time period; access grade broadcast information and a corresponding access prohibition time period; access grade broadcast information and a corresponding validity time period;
a first threshold; a second threshold; a third threshold; a fourth threshold; a fifth threshold; a sixth threshold; or a power threshold,
where the access prohibition time includes at least one of an access prohibition start time, an access prohibition duration, or an access prohibition end time; and
the waiting time includes at least one of: a waiting start time, a waiting duration, or a waiting end time.

The connection management apparatus provided in this embodiment and the connection management method provided in the above embodiments belong to the same inventive concept. For technical details that are not described in detail in this embodiment, reference may be made to any of the above embodiments. This embodiment has the same beneficial effects as those obtained by the execution of the connection management method.

An embodiment of the present disclosure further provides a communication node. FIG. 8 is a schematic structural diagram of hardware of a communication node according to an embodiment. As shown in FIG. 8, the communication node provided by the present disclosure includes a memory 52, a processor 51, and a computer program stored in the memory and executable by the processor. The program, when executed by the processor 51, causes the processor 51 to implement the connection management method described above.

The communication node may further include a memory 52. The number of processors 51 in the communication node may be one or more. One processor 51 is used as an example in FIG. 8. The memory 52 is configured for storing one or more programs which, when executed by the one or more processors 51, cause the one or more processors 51 to implement the connection management method according to the embodiments of the present disclosure.

The communication node further includes a communication apparatus 53, an input apparatus 54, and an output apparatus 55.

The processor 51, the memory 52, the communication apparatus 53, the input apparatus 54, and the output apparatus 55 in the communication node may be connected by a bus or in other ways. Connection by a bus is used as an example in FIG. 8.

The input apparatus 54 may be configured for receiving inputted numerical or character information, and generating a key signal input related to user settings and function control of the communication node. The output apparatus 55 may include a display device such as a display screen.

The communication apparatus 53 may include a receiver and a transmitter. The communication apparatus 53 is configured for transmitting and receiving information under the control of the processor 51.

The memory 52, as a computer-readable storage medium, may be configured for storing a software program, a computer-executable program, and modules, for example, program instructions/modules corresponding to the connection management method in the embodiments of the present disclosure (for example, the condition determining module 310 and the connection module 320 in the connection management apparatus). The memory 52 may include a program storage area and a data storage area. The program storage area may store an operating system, and an application required by at least one function. The data storage area may store data created according to the use of the communication node and the like. In addition, the memory 52 may include a high-speed random access memory, and may also include a nonvolatile memory, e.g., at least one magnetic disk storage device, flash memory device, or other nonvolatile solid-state storage device. In some examples, the memory 52 may further include memories located remotely from the processor 51, and the remote memories may be connected to the communication node via a network. Examples of the network include, but not limited to, the Internet, an intranet, a local area network, a mobile communication network, and combinations thereof.

An embodiment of the present disclosure further provides a storage medium, storing a computer program which, when executed by a processor, causes the processor to implement the connection management method according to any of the embodiments of the present disclosure. The method includes: determining a connection condition that a UE satisfies; and performing a corresponding RRC connection operation when the connection condition is satisfied.

Alternatively, the method includes: sending first indication information, where the first indication information is used for instructing a UE to determine a corresponding RRC connection operation according to a connection condition that the UE satisfies; and responding to an RRC connection operation performed by the UE.

The computer-readable storage medium in the embodiment of the present disclosure may be any combination of one or more computer-readable media. The computer-readable medium may be a computer-readable signal medium or a computer-readable storage medium. For example, the computer-readable storage medium may include, but not limited to, an electrical, magnetic, optical, electromagnetic, infrared, or semiconductor system, apparatus, or device, or any combination thereof. Specific examples (non-exclusive list) of the computer-readable storage medium include: an electrical connection having one or more wires, a portable computer disk, a hard disk, a Random Access Memory (RAM), a Read-Only Memory (ROM), an Erasable Programmable Read-Only Memory (EPROM), a flash memory, an optical fiber, a portable Compact Disc Read-Only Memory (CD-ROM), an optical storage device, a magnetic storage device, or any suitable combination thereof. The computer-readable storage medium may be any tangible medium containing or storing a program that may be used by or in combination with an instruction execution system, apparatus, or device.

The computer-readable signal medium may include a data signal propagated in a baseband or as part of a carrier. The data signal carries computer-readable program code. Such a propagated data signal may be in a variety of forms including, but not limited to, an electromagnetic signal, an optical signal, or any suitable combination thereof. The computer-readable signal medium may also be any computer-readable medium other than a computer-readable storage medium, and may send, propagate, or transmit a program for use by or in combination with an instruction execution system, apparatus, or device.

The program code contained on the computer-readable medium may be transmitted using any suitable medium, including but not limited to, via wireless transmission, via a wire, via a fiber optic cable, via Radio Frequency (RF), etc., or any suitable combination thereof.

Computer program code for executing the operations of the present disclosure may be compiled in one or more programming languages or a combination of programming languages, including object-oriented programming languages such as Java, Smalltalk, and C++, and conventional procedural programming languages such as the "C" language or similar programming languages. The program code can be entirely executed on a user's computer, partly executed on the user's computer, executed as a separate software package, partly executed on the user's computer and partly executed on a remote computer, or entirely executed on a remote computer or server. In cases involving a remote computer, the remote computer may be connected to the user's computer via any type of network, including a Local Area Network (LAN) or a Wide Area Network (WAN), or may be connected to an external computer (e.g., via an Internet service provided by an Internet service provider).

The above description is only several embodiments of the present disclosure, and is not intended to limit the scope of the present disclosure.

As will be understood by those having ordinary skills in the art, the term user terminal encompasses any suitable type of wireless user equipment, such as a mobile telephone, portable data processing device, portable web browser or vehicle-mounted mobile station.

In general, the various embodiments of the present disclosure may be implemented in hardware or special purpose circuits, software, logic, or any combination thereof. For example, some aspects may be implemented in hardware, while other aspects may be implemented in firmware or software that can be executed by a controller, microprocessor or other computing device, but the present disclosure is not limited thereto.

The embodiments of the present disclosure may be implemented by the execution of computer program instructions by a data processor of a mobile device, for example, in a processor entity, or by hardware, or by a combination of software and hardware. The computer program instructions may be assembly instructions, Instruction Set Architecture (ISA) instructions, machine instructions, machine dependent instructions, microcode, firmware instructions, mode setting data, or source code or object code written in any combination of one or more programming languages.

The block diagram of any logic flow in the accompanying drawings of the present disclosure may represent program steps, or may represent interconnected logic circuits, modules and functions, or may represent a combination of program steps and logic circuits, modules and functions. The computer program may be stored in a memory. The memory may be of any type suitable for the local technical environment and may be implemented using any suitable data storage technology, such as, but not limited to, Read-Only Memory (ROM), Random Access Memory (RAM), and optical storage devices and systems (Digital Video Disc (DVD) or Compact Disk (CD)), etc. The computer-readable medium may include a non-transitory storage medium. The data processor may be of any type suitable for the local technical environment, such as, but not limited to, a general purpose computer, a special purpose computer, a microprocessor, a Digital Signal Processor (DSP), an Application Specific Integrated Circuit (ASIC), a programmable logic device (for example, a Field-Programmable Gate Array (FPGA)), and a processor based on a multi-core processor architecture.

The foregoing has provided a detailed description of several embodiments of the present disclosure by way of several non-limiting examples. However, various modifications and adjustments to the above embodiments are obvious to those having ordinary skills in the art in light of the accompanying drawings and the claims, but do not depart from the scope of the present disclosure. Therefore, the proper scope of the present disclosure will be defined by the claims.

## Claims

1. A connection management method, comprising:
determining a connection condition that a User Equipment (UE) satisfies; and
performing a corresponding Radio Resource Control (RRC) connection operation in response to the connection condition being satisfied.

2. The method of claim 1, wherein the connection condition comprises a trigger condition; and
performing a corresponding RRC connection operation in response to the connection condition being satisfied comprises:
performing a first connection operation in response to the trigger condition being satisfied, wherein the first connection operation comprises establishing or resuming an RRC connection.

3. The method of claim 1, wherein the connection condition comprises an access prohibition condition; and performing a corresponding RRC connection operation in response to the connection condition being satisfied comprises:
performing a second connection operation in response to the access prohibition condition being satisfied, wherein the second connection operation comprises delaying establishment of an RRC connection, delaying resumption of an RRC connection, not establishing an RRC connection, or not resuming an RRC connection.

4. The method of claim 1, further comprising:
receiving first indication information, wherein the first indication information is used for instructing the UE to determine the corresponding RRC connection operation according to the connection condition.

5. The method of claim 1, further comprising:
receiving second indication information, wherein the second indication information is used for instructing the UE to determine a threshold for the RRC connection operation.

6. The method of claim 3, further comprising:
returning information indicating an RRC connection establishment failure or resumption failure to a Non-Access Stratum (NAS) through RRC.

7. The method of claim 1, further comprising:
reporting a parameter for determining an RRC connection operation to an NAS through RRC.

8. The method of claim 2, wherein determining a connection condition that a UE satisfies comprises: determining according to a first service type that the UE satisfies the trigger condition,
wherein the first service type comprises at least one of an emergency call, a called service, an Early Data Transmission (EDT) service, a Preconfigured Uplink Resource (PUR) service, or a service having a data packet less than a threshold.

9. The method of claim 3, wherein determining a connection condition that a UE satisfies comprises: determining according to a second service type that the UE satisfies the access prohibition condition,
wherein the second service type comprises at least one of a calling service, a non-EDT service, a non-PUR service, or a service having a data packet reaching a threshold.

10. The method of claim 3, wherein determining a connection condition that a UE satisfies comprises:
determining that the UE satisfies the access prohibition condition according to at least one of the following pieces of information:
a time at which a serving cell stops service; a time at which a target cell starts service; ephemeris information;
signal quality of a serving cell; a waiting time; an access prohibition time; a time of a coverage hole; a time of a specified operation;
access prohibition broadcast information and a corresponding validity time period; access grade broadcast information and a corresponding access prohibition time period; or access grade broadcast information and a corresponding validity time period,
wherein the access prohibition time comprises at least one of an access prohibition start time, an access prohibition duration, or an access prohibition end time; and
the waiting time comprises at least one of: a waiting start time, a waiting duration, or a waiting end time.

11. The method of claim 3, wherein the access prohibition condition comprises at least one of:
a current moment being later than a set moment corresponding to a first threshold before a time at which a serving cell stops service;
a current moment being earlier than a set moment corresponding to a second threshold before a time at which a target cell starts service;
a Reference Signal Received Power (RSRP) in a serving cell being less than a power threshold;
a current moment belonging to a waiting time or an access prohibition time;
a service type belonging to a second service type;
a current moment belonging to a validity time period corresponding to access prohibition broadcast information;
a current moment belonging to an access prohibition time period corresponding to access grade broadcast information;
a current moment belonging to a validity time period corresponding to access grade broadcast information;
a current moment being later than a set moment corresponding to a third threshold before a start time of a coverage hole; or
a current moment being later than a set moment corresponding to a fourth threshold before a start time of a specified operation.

12. The method of claim 3, further comprising:
determining a waiting time required for establishing or resuming an RRC connection or an access prohibition time according to a time of a coverage hole, a time at which a serving cell stops service, a time at which a target cell starts service, or a time of a specified operation,
wherein the specified operation comprises at least one of
deactivating an Access Stratum (AS), stopping a measurement, stopping cell selection or reselection, stopping listening for a paging message, stopping Public Land Mobile Network (PLMN) selection, or stopping initiating an RRC process.

13. The method of claim 2, wherein determining a connection condition that a UE satisfies comprises:
determining that the UE satisfies the trigger condition according to at least one of the following pieces of information:
a time at which a serving cell stops service; a time at which a target cell starts service; a result of cell reselection or cell selection; an end time of a coverage hole; or an end time of access prohibition.

14. The method of claim 2, wherein the trigger condition comprises at least one of:
a current moment being earlier than a set moment corresponding to a fifth threshold before a time at which a serving cell stops service;
a current moment being later than a set moment corresponding to a sixth threshold before a time at which a target cell starts service;
cell reselection or cell selection being completed;
a current moment being later than a set moment corresponding to a seventh threshold before an end time of a coverage hole; or
a current moment being later than a set moment corresponding to an eighth threshold after an end time of access prohibition.

15. The method of claim 7, wherein the parameter for determining the RRC connection operation comprises at least one of
a time at which a serving cell stops service; a time at which a target cell starts service; an access prohibition time; a waiting time; or a UE identity in a paging message.

16. The method of claim 1, wherein the connection condition comprises a reestablishment condition; and determining a connection condition that a UE satisfies comprises: determining that the UE satisfies the reestablishment condition according to at least one of the following pieces of information: a time at which a serving cell stops service; a time at which a target cell starts service; channel quality of a serving cell; or access prohibition information of a serving cell.

17. The method of claim 16, wherein the reestablishment condition comprises at least one of:
a current moment belonging to a set range corresponding to the time at which the serving cell stops service;
an Out-Of-Step (OOS) message being received;
a current moment belonging to a timing period of monitoring a wireless link failure;
a current moment belonging to a set range corresponding to the time at which the target cell starts service; or
the serving cell being a serving cell to which access is prohibited.

18. A connection management method, comprising:
sending first indication information, wherein the first indication information is used for instructing a User Equipment (UE) to determine a corresponding Radio Resource Control (RRC) connection operation according to a connection condition that the UE satisfies; and
responding to an RRC connection operation performed by the UE.

19. The method of claim 18, further comprising:
sending second indication information, wherein the second indication information is used for instructing the UE to determine a threshold for an RRC connection operation.

20. The method of claim 18, further comprising:
sending third indication information, wherein the third indication information is used for instructing the UE to report a parameter for determining a RRC connection operation to a Non-Access Stratum (NAS) of the UE through RRC.

21. The method of claim 18, further comprising: configuring at least one of the following through system information broadcast or through an RRC message:
a time at which a serving cell stops service; a time at which a target cell starts service; ephemeris information;
signal quality of a serving cell; a waiting time; an access prohibition time; a coverage hole; a time of a specified operation;
access prohibition broadcast information and a corresponding validity time period; access grade broadcast information and a corresponding access prohibition time period; access grade broadcast information and a corresponding validity time period;
a first threshold; a second threshold; a third threshold; a fourth threshold; a fifth threshold; a sixth threshold; or a power threshold,
wherein the access prohibition time comprises at least one of an access prohibition start time, an access prohibition duration, or an access prohibition end time; and
the waiting time comprises at least one of: a waiting start time, a waiting duration, or a waiting end time.

22. A communication node, comprising a memory, a processor, and a computer program stored in the memory and executable by the processor, wherein the computer program, when executed by the processor, causes the processor to perform the connection management method of any of claims 1 to 21.

23. A computer-readable storage medium, storing a computer program which, when executed by a processor, causes the processor to perform the connection management method of any of claims 1 to 21.
